# EUROPEAN PATENT APPLICATION

(11) **EP 4 023 563 A1**
(43) Date of publication of application: **06.07.2022**
(21) Application number: 20857417.8
(22) Date of filing: 08.05.2020
(51) Int. Cl.: B65D 30/02, C08L 23/00, C08J 5/00, C08K 3/26

(54) **RESIN COMPOSITION, AND MOLDED ARTICLE**

(30) Priority: 28.08.2019 JP 2019156106
(71) Applicant: TBM Co., Ltd., Tokyo 100-0006 (JP)
(72) Inventor: SASAKAWA Gouki, Tokyo 104-0061 (JP); NIIKURA Hiroyuki, Tokyo 104-0061 (JP)
(74) Representative: Papula Oy
(86) International application number: PCT/JP2020/018724
(87) International publication number: WO 2021/038972

(57) **Abstract**

An object of the present invention is to provide a molded product in which blocking is reduced without impairing printability. The present invention provides a resin composition including: a polyolefin-based resin and an inorganic substance powder in a mass ratio of 50:50 to 10:90, in which the inorganic substance powder comprises calcium carbonate, the calcium carbonate comprises a first calcium carbonate having an average particle diameter of 0.5 µm or more and less than 2.0 µm measured by an air permeation method in accordance with JIS M-8511 and a second calcium carbonate having an average particle diameter of 2.0 µm or more and less than 9.0 µm measured by the air permeation method in accordance with JIS M-8511, and a mass ratio of the first calcium carbonate and the second calcium carbonate is 90:10 to 98:2.

## Description

### Field

The present invention relates to a resin composition and a molded product.

### Background

A molded products obtained from a resin composition including a polyolefin-based resin or the like (a polyolefin-based resin-containing resin composition) has been used for a wide range of applications. Furthermore, in order to improve the various properties (for example, printability and water resistance) of such a molded product, a polyolefin-based resin-containing resin composition in which various components are blended has been proposed (for example, Patent Literatures 1 to 4).

### Citation List

### Patent Literature

Patent Literature 1: Japanese Patent Application Laid-open No. 2015-205942
Patent Literature 2: Published Japanese Translation of PCT International Publication for Patent Application No. 2014-508688
Patent Literature 3: Japanese Patent Application Laid-open No. 2015-203035
Patent Literature 4: Published Japanese Translation of PCT International Publication for Patent Application No. 2011-510106

### Summary

### Technical Problem

On the other hand, as the molded product obtained from the polyolefin-based resin-containing resin composition, for example, a problem of adhesiveness of the molded products to each other (what is called "blocking") has been known in the case where the molded product has a thin thickness (sheet, film, or the like).

As a method for preventing blocking, it is conceivable that a large amount of a component having a large particle diameter is blended with the resin composition. However, the surface of the molded product obtained from such a resin composition has many irregularities, which may cause a problem of remarkably inferior printability.

The present invention has been made in view of the above circumstances. An object of the present invention is to provide a resin composition that provides a molded product in which blocking is reduced without impairing printability.

### Solution to Problem

As a result of intensive study for solving the above problems, the inventors of the present invention have found that the above problems can be solved by blending two kinds of calcium carbonate having different average particle diameters in a predetermined mass ratio with the polyolefin-based resin-containing resin composition. Consequently, the present invention has been attained. Specifically, the present invention provides the following.
(1) A resin composition comprising: a polyolefin-based resin and an inorganic substance powder in a mass ratio of 50:50 to 10:90, in which
   the inorganic substance powder comprises calcium carbonate; the calcium carbonate comprises a first calcium carbonate having an average particle diameter of 0.5 µm or more and less than 2.0 µm measured by an air permeation method in accordance with JIS M-8511 and a second calcium carbonate having an average particle diameter of 2.0 µm or more and less than 9.0 µm measured by the air permeation method in accordance with JIS M-8511; and
   a mass ratio of the first calcium carbonate and the second calcium carbonate is 90:10 to 98:2.
(2) The resin composition as described in (1), in which the mass ratio of the polyolefin-based resin and the inorganic substance powder is 40:60 to 10:90.
(3) The resin composition as described in (1) or (2), in which the polyolefin-based resin is derived from plants.
(4) The resin composition as described in any one of (1) to (3), in which the polyolefin-based resin comprises a polypropylene resin and/or a polyethylene resin.
(5) The resin composition as described in any one of (1) to (4), in which the calcium carbonate is surface-treated heavy calcium carbonate.
(6) A molded product made of the resin composition as described in any one of (1) to (5).
(7) The molded product as described in (6), in which the molded product is a packaging bag.
(8) The molded product as described in (6), in which the molded product is a printing sheet.

### Advantageous Effects of Invention

The present invention provides a molded product in which blocking is reduced without impairing printability.

### Description of Embodiments

Hereinafter, the embodiments of the present invention will be described in detail. The present invention, however, is not limited thereto.

### <Resin composition according to present invention>

The resin composition according to the present invention is a polyolefin-based resin-containing resin composition that satisfies all of the following requirements.
(1) The polyolefin-based resin and the inorganic substance powder are included in a mass ratio of 50:50 to 10:90.
(2) The inorganic substance powder includes calcium carbonate.
(3) The calcium carbonate includes a first calcium carbonate having an average particle diameter of 0.5 µm or more and less than 2.0 µm measured by an air permeation method in accordance with JIS M-8511 and a second calcium carbonate having an average particle diameter of 2.0 µm or more and less than 9.0 µm measured by the air permeation method in accordance with JIS M-8511.
(4) A mass ratio of the first calcium carbonate and the second calcium carbonate is 90:10 to 98:2.

With respect to the molded product obtained from the polyolefin-based resin-containing resin composition, the molded product has had difficulty in satisfying both reduction in blocking and excellent printability as described above. Therefore, as a result of intensive studies conducted by the inventors of the present invention, surprisingly, it has been found that blend of two kinds of calcium carbonate (that is, the first and second calcium carbonates) having different average particle diameters so as to satisfy the above requirements in the polyolefin-based resin-containing resin composition allows the resin composition that provides the molded product in which blocking is reduced without impairing printability to be provided.

In the present invention, "printability" refers to the sharpness (presence or absence and degree of, for example, missing, smear, and fading) of printing in the case where the molded product of the resin composition is printed by an arbitrary printing method (for example, gravure printing, offset printing, and screen printing). According to the present invention, the molded product capable of having clear print with less missing, smear, and fading or no missing, smear, and fading can be obtained.

In the present invention, "reducing blocking" means that the molded product of the resin composition according to the present invention has a low coefficient of static friction in accordance with JIS K7125 (for example, the coefficient of static friction in accordance with JIS K7125 is 0.5 or less). According to the present invention, the molded product in which blocking is reduced can be obtained and thus, for example, adhesiveness is reduced even when the molded products obtained from the resin composition of the present invention are overlapped with each other. This allows problems such as frequent occurrence of difficulty in opening the opening part in the case where the molded product is a packaging bag or the like to be less likely to occur.

### (Inorganic substance powder)

The inorganic substance powder in the present invention includes at least calcium carbonate and preferably is composed of calcium carbonate.

### [Average particle diameter of first and second calcium carbonates]

The calcium carbonate in the present invention includes two kinds of calcium carbonates having different average particle diameters, that is, a first calcium carbonate having an average particle diameter of 0.5 µm or more and less than 2.0 µm and a second calcium carbonate having an average particle diameter of 2.0 µm or more and less than 9.0 µm.

In the present invention, the "average particle diameter" refers to a value measured by the air permeation method in accordance with JIS M-8511. As a measurement device of the average particle diameter, for example, a specific surface area measurement apparatus Type SS-100 manufactured by SHIMADZU CORPORATION can be preferably used.

The first calcium carbonate is less likely to generate irregularities on the surface of the obtained molded product even when a large amount of the first calcium carbonate is blended in the resin composition. From this viewpoint, the average particle diameter of the first calcium carbonate may be preferably 0.5 µm or more and 1.8 µm or less and more preferably 0.5 µm or more and 1.5 µm or less.

As the first calcium carbonate, particles having a particle diameter of more than 45 µm are preferably substantially excluded. In the present invention, the phrase "substantially excluded" means an aspect in which the particles having such a particle diameter are included, for example, in a proportion of less than 0.1% by mass and more preferably less than 0.01% by mass relative to the mass of the entire particles.

The second calcium carbonate generates irregularities on the surface of the obtained molded product by blending with the resin composition in a slight amount. From this viewpoint, the average particle diameter of the second calcium carbonate may be preferably 2.0 µm or more and 8.8 µm or less and more preferably 2.3 µm or more and 8.5 µm or less.

As the second calcium carbonate, particles having a particle diameter of more than 45 µm are preferably substantially excluded.

As the first calcium carbonate and the second calcium carbonate, one or more kinds of calcium carbonate satisfying the respective average particle diameters may be used. For example, as the first calcium carbonate, particles having an average particle diameter of 0.5 µm alone may be used or particles having an average particle diameter of 0.5 µm and particles having an average particle diameter of 1.0 µm may be used in combination.

### [Mass ratio of first and second calcium carbonates]

The first calcium carbonate and the second calcium carbonate are blended with the resin composition so as to be a mass ratio thereof of 90:10 to 98:2. As described above, slight irregularities on the surface of the molded product obtained from the resin composition are generated so that the second calcium carbonate having a large average particle diameter is blended in a slight ratio relative to the first calcium carbonate having a smaller average particle diameter. Consequently, the molded product can reduce blocking without impairing the printability.

The first calcium carbonate having a proportion of less than 90% relative to the entire amount of the first and second calcium carbonates results in an excessively large ratio of the second calcium carbonate. Therefore, although blocking is reduced, the molded product is inferior in printability and may cause fading or missing in the printing on the surface of the molded product.

The first calcium carbonate having a proportion of more than 98% relative to the entire amount of the first and second calcium carbonates results in an excessively small ratio of the second calcium carbonate. Therefore, although the printability is improved, irregularities on the surface of the molded product are hardly observed and the molded product may be inferior in the blocking property.

The mass ratio of the first calcium carbonate to the second calcium carbonate is preferably 91:9 to 97:3 and more preferably 92:8 to 96:4.

### [Other conditions for the first and second calcium carbonates]

The calcium carbonate used as the first and second calcium carbonates is not particularly limited as long as the average particle diameter and the mass ratio satisfy the above description.

The calcium carbonate may be either calcium carbonate prepared by a synthetic method (what is called light calcium carbonate) or calcium carbonate obtained by mechanically pulverizing and classifying natural raw materials such as limestone including CaCO₃ as the main component (what is called heavy calcium carbonate). These calcium carbonates may be used in combination.

The surface of the calcium carbonate may or may not be modified in accordance with the common methods. Examples of the surface modification method include a method of physical treatment such as plasma treatment and a method of chemical treatment using a coupling agent or a surfactant.

From the viewpoint of economic efficiency and the viewpoint of uniform dispersion into the resin composition, surface-treated heavy calcium carbonate is preferably used as calcium carbonate.

### [Other inorganic substance powder]

The inorganic substance powder other than calcium carbonate is not particularly limited and may be calcium carbonate that does not satisfy the requirements of the first calcium carbonate and the second calcium carbonate or an inorganic substance powder included in common resin products or the like. The inorganic substance powders may be used singly or in combination of two or more of them.

Examples of the other inorganic substance powder include magnesium carbonate, calcium oxide, zinc oxide, titanium oxide, silica, alumina, clay, talc, kaolin, calcium hydroxide, aluminum hydroxide, and magnesium hydroxide.

The average particle diameter of the other inorganic substance powder is preferably less than 2.0 µm from the viewpoint of not impairing the action of the first and second calcium carbonates.

The content of the other inorganic substance powder is preferably 5.0% by mass or less in the resin composition from the viewpoint of not impairing the action of the first and second calcium carbonates. It is more preferable that the other inorganic substance powder be not included, that is, the inorganic substance powder be composed of the first and second calcium carbonates.

### (Polyolefin-based resin)

The polyolefin-based resin refers to a polyolefin-based resin containing an olefin component unit as a main component. Specific examples of the polyolefin-based resins include the polypropylene-based resin and the polyethylene-based resin as described above, and in addition polymethyl-1-pentene and ethylene-cyclic olefin copolymers, as well as a mixture of two or more of these resins.

The above phrase "as a main component" means that the olefin component unit is contained in the polyolefin-based resin in an amount of 50% by mass or more. The content of the olefin component unit is preferably 75% by mass or more, more preferably 85% by mass, and further preferably 90% by mass or more.

The method for producing the polyolefin-based resin is not particularly limited. The polyolefin-based resin may be obtained by any of methods using a Ziegler-Natta catalyst, a metallocene catalyst, oxygen, a radical initiator such as a peroxide, and the like.

The polyolefin-based resin may be derived from plants. For example, a monomer derived from a biomass raw material may be used as a polyolefin-based resin.

Examples of the polypropylene-based resin include resins containing a propylene component unit of 50% by mass or more. Examples of the resin include propylene homopolymers or copolymers of propylene and other α-olefins copolymerizable with propylene.

Examples of the other α-olefins that can be copolymerized with propylene include α-olefins having a carbon number of 4 to 10 such as ethylene, 1-butene, isobutylene, 1-pentene, 3-methyl-1-butene, 1-hexene, 3,4-dimethyl-1-butene, 1-heptene, and 3-methyl-1-hexene.

As the propylene homopolymers, any of isotactic polypropylene, syndiotactic polypropylene, atactic polypropylene, hemiisotactic polypropylene, and linear or branched polypropylene exhibiting various
stereoregularities are included.

The copolymer of propylene and other α-olefin copolymerizable with propylene may be a random copolymer or a block copolymer and may be not only a binary copolymer but also a ternary copolymer.

Specifically, examples thereof include an ethylene-propylene random copolymer, a butene-1-propylene random copolymer, an ethylene-butene-1-propylene random ternary copolymer, and an ethylene-propylene block copolymer.

In the copolymer of propylene and other α-olefin copolymerizable with propylene, the content of the α-olefin is preferably 25% by mass or less, more preferably 15% by mass or less, and further preferably 0.3% by mass or less when the total mass of the resin is determined to be 100% by mass.

Examples of the polyethylene-based resin include resins having an ethylene component unit of 50% by mass or more. Examples of the polyethylene-based resin include high-density polyethylene (HDPE), low-density polyethylene (LDPE), ultra-low-density polyethylene (ULDPE), medium-density polyethylene, linear low-density polyethylene (LLDPE), an ethylene-vinyl acetate copolymer, an ethylene-propylene copolymer, an ethylene-propylene-butene-1 copolymer, an ethylene-butene-1 copolymer, an ethylene-hexene-1 copolymer, an ethylene-4-methylpentene-1 copolymer, and an ethylene-octene-1 copolymer.

The "high-density polyethylene (HDPE)" is polyethylene having a density of 0.942 g/cm³ or more.

The "medium-density polyethylene" is polyethylene having a density of 0.930 g/cm³ or more and less than 0.942 g/cm³.

The "low-density polyethylene (LDPE)" is polyethylene having a density of 0.910 g/cm³ or more and less than 0.930 g/cm³.

The "ultra-low-density polyethylene (ULDPE)" is polyethylene having a density of less than 0.910 g/cm³.

The "linear low-density polyethylene (LLDPE)" is polyethylene having a density of 0.911 g/cm³ or more and less than 0.940 g/cm³ (preferably a density of 0.912 g/cm³ or more and less than 0.928 g/cm³).

Of the above-described polyolefin-based resins, the polypropylene resins and/or the polyethylene resins are preferable because they have a particularly excellent balance between mechanical strength and heat resistance.

### [Ratio of polyolefin-based resin composition and inorganic substance powder]

The blend ratio (% by mass) of the polyolefin-based resin and the inorganic substance powder is not particularly limited as long as polyolefin-based resin: inorganic substance powder is in a ratio of 50:50 to 10:90. This blend ratio is more preferably in a ratio of 40:60 to 10:90, and further preferably in a ratio of 40:60 to 15:85. The amount of the above inorganic substance powder is the entire amount in which the total amount of the first and second calcium carbonate particles is added to the amount of other inorganic substance powder that may be added, if necessary.

In the case where the proportion of the inorganic substance powder is less than 50% by mass in the blend ratio of the polyolefin-based resin and the inorganic substance powder, a given texture and physical properties such as impact resistance of the resin composition due to the blend of the inorganic substance powder are difficult to obtain. On the other hand, in the case where the proportion of the inorganic substance powder is more than 90% by mass, molding processing by, for example, extrusion molding or vacuum molding becomes difficult.

### (Other components)

In the resin composition according to the present invention, optional components that can be blended with the resin composition may be included in the resin composition, if necessary. Examples of such components include colorants, lubricating agents, coupling agents, flowability improvers, dispersing agents, antioxidants, ultraviolet ray absorbers, flame retardants, stabilizers, antistatic agents, foaming agents, and plasticizers. These additives may be used singly or in combination of two or more of them. The blend amount of these components may be appropriately set depending on the effect to be obtained or the like.

The average particle diameter of the other component is preferably less than 2.0 µm from the viewpoint of not impairing the action of the first and second calcium carbonates.

### <Method for producing resin composition>

As a method for producing the resin composition according to the present invention, a method usually known as a method for producing a resin composition may be employed. For example, the method may be appropriately set depending on the molding method (for example, extrusion molding, injection molding, and vacuum molding) for obtaining the molded product.

The first and second calcium carbonates may be blended with other materials in any state and timing. For example, the first and second calcium carbonates may be mixed separately with another material (resin or the like) or may be mixed at the same time.

The form of the resin composition is not particularly limited and examples thereof include pellets. The shape of the pellet is not particularly limited and examples thereof include a cylindrical shape, a spherical shape, and an elliptical spherical shape.

### <Molded product>

The molded product according to the present invention is a molded product molded by an arbitrary molding method using the above resin composition.

The method for molding the molded product may be appropriately selected depending on the kind of the molded product and the like. For example, in the case where the molded product is a sheet, examples of the method include a method for continuously performing a step of kneading the materials constituting the resin composition and a step of molding the kneaded product into a sheet-like product. In such a method, for example, a T-die type twin-screw molding machine can be used. The obtained sheet may be stretched (for example, longitudinal stretching and/or transverse stretching), if necessary.

The shape and the like of the molded product according to the present invention are not particularly limited and molded products having various forms may be employed. The molded product according to the present invention may be, for example, a sheet, a film, and a container.

As the molded product according to the present invention, a packaging bag (for example, a shopping bag and a plastic bag) and a printing sheet (for example, wrapping paper and leaflet) are preferable from the viewpoint of effectively utilizing the effect in which blocking is reduced without impairing printability.

As the packaging bag, a bag obtained by laminating sheets obtained from the resin composition according to the present invention (for example, a sheet having a thick film thickness of 30 µm or more and 80 µm or less or a sheet having a thin film thickness of 12 µm or more and 29 µm or less) is preferable.

As the printing sheet, a sheet obtained from the resin composition according to the present invention (for example, a sheet having a film thickness of 70 µm or more and 100 µm or less) as it is or a sheet of which surface is appropriately processed is preferably used.

### Examples

Hereinafter, the present invention will be specifically described with reference to Examples. The present invention, however, is not limited to these Examples.

### <Production of molded body>

In accordance with the following methods, molded bodies were produced from the resin compositions. The compositions of the resin compositions are listed in the section of "Composition of resin composition" in Tables 1 to 4.

### (Preparation of polyolefin-based resin)

As the polyolefin-based resin, one of the following was used.
Polyolefin-based resin-1: Plant-derived linear low-density polyethylene (LLDPE) manufactured by Braskem S. A.
Polyolefin-based resin-2: Plant-derived polypropylene (PP)

### (Preparation of inorganic substance powder)

As the inorganic substance powder, calcium carbonate powder was used. The calcium carbonate powder includes two kinds of calcium carbonates selected from the following having different average particle diameters in the mass ratio listed in the section of "Ratio of calcium carbonate" in Tables 1 to 4.

### [First calcium carbonate]

First calcium carbonate-A: Calcium carbonate having an average particle diameter measured by the air permeation method in accordance with JIS M-8511 of 0.5 µm manufactured by Maruo Calcium Co., Ltd.

First calcium carbonate-B: Calcium carbonate having an average particle diameter measured by the air permeation method in accordance with JIS M-8511 of 1.5 µm manufactured by Maruo Calcium Co., Ltd.

### [Second calcium carbonate]

Second calcium carbonate-a: Calcium carbonate having an average particle diameter measured by the air permeation method in accordance with JIS M-8511 of 2.3 µm manufactured by Bihoku Funka Kogyo Co., Ltd.

Second calcium carbonate-b: Calcium carbonate having an average particle diameter measured by the air permeation method in accordance with JIS M-8511 of 8.5 µm manufactured by Bihoku Funka Kogyo Co., Ltd.

### [Third calcium carbonate]

Third calcium carbonate-a: Calcium carbonate having an average particle diameter measured by the air permeation method in accordance with JIS M-8511 of 0.2 µm manufactured by Maruo Calcium Co., Ltd.

Third calcium carbonate-β: Calcium carbonate having an average particle diameter measured by the air permeation method in accordance with JIS M-8511 of 15 µm manufactured by Bihoku Funka Kogyo Co., Ltd.

All of the above calcium carbonates correspond to heavy calcium carbonates of which surfaces are treated. The average particle diameter of the calcium carbonate was calculated from the measurement result of the specific surface area by the air permeation method in accordance with JIS M-8511 using the specific surface area measurement apparatus Type SS-100 manufactured by SHIMADZU CORPORATION.

### (Production of resin composition)

The polyolefin-based resin, the first calcium carbonate, and the second calcium carbonate were kneaded with a co-rotating twin screw extruder under a condition of 230°C to give a resin composition.

### (Molding of resin composition)

The resin composition was molded using an inflation molding machine to give a molded body (plastic sheet) having an average thickness of 50 µm.

### <Evaluation of molded body>

The following evaluation was performed with respect to the molded body (plastic sheet) obtained in the above section of "(Molding of resin composition)".

### (Printability of molded body)

Gravure printing was performed on the surface of the molded body in accordance with a usual method and the printability of the molded body was evaluated in accordance with the following criteria. The results are listed in the section of "Printability" in Tables 1 to 4.
∘: No missing, smear, fading, and the like are observed and print is clear.
×: Missing, smear, fading, and the like are observed and print is unclear.

### (Blocking of molded body)

The coefficient of static friction on the surface of the molded body was measured in accordance with JIS K7125 and evaluated in accordance with the following criteria. The results are listed in the "Blocking" section in Tables 1-4. As the coefficient of static friction of the surface becomes lower, the overlapped molded products becomes less likely to cause adhesiveness to each other. Therefore, the lower coefficient of friction of the surface means that the molded body is less likely to cause blocking of the molded bodies to each other.
∘: The coefficient of static friction is 0.5 or less (blocking is less likely to occur).
×: The coefficient of static friction is larger than 0.5 (blocking is likely to occur).

**[Table 1]**

| | | Kind | Example 1-1 | Example 1-2 | Example 1-3 | Comparative Example 1-1 | Comparative Example 1-2 | Comparative Example 1-3 | Comparative Example 1-4 |
|---|---|---|---|---|---|---|---|---|---|
| Composition of resin composition | Polyolefin-based resin (% by mass) | 1 | 40 | 40 | 40 | 40 | 40 | 40 | 40 |
| | Entire amount of calcium carbonate (% by mass) | | 60 | 60 | 60 | 60 | 60 | 60 | 60 |
| Ratio of calcium carbonate | First calcium carbonate | A | 98 | 95 | | 80 | 99 | 95 | 99 |
| | | B | | | 90 | | | | |
| | Second calcium carbonate | a | 2 | 5 | 10 | 20 | 1 | | |
| | | b | | | | | | | |
| | Third calcium carbonate | α | | | | | | 5 | |
| | | β | | | | | | | 1 |
| Evaluation results | Printability | | ∘ | ∘ | ∘ | × | ∘ | ∘ | × |
| | Blocking | | ∘ | ∘ | ∘ | ∘ | × | × | × |

**[Table 2]**

| | | Kind | Example 2-1 | Example 2-2 | Example 2-3 | Comparative Example 2-1 | Comparative Example 2-2 | Comparative Example 2-3 | Comparative Example 2-4 |
|---|---|---|---|---|---|---|---|---|---|
| Composition of resin composition | Polyolefin-based resin (% by mass) | 1 | 15 | 15 | 15 | 15 | 15 | 15 | 15 |
| | Entire amount of calcium carbonate (% by mass) | | 85 | 85 | 85 | 85 | 85 | 85 | 85 |
| Ratio of calcium carbonate | First calcium carbonate | A | 98 | 95 | 90 | 80 | 99 | 95 | 99 |
| | | B | | | | | | | |
| | Second calcium carbonate | a | 2 | 5 | | 20 | 1 | | |
| | | b | | | 10 | | | | |
| | Third calcium carbonate | α | | | | | | 5 | |
| | | β | | | | | | | 1 |
| Evaluation results | Printability | | ∘ | ∘ | ∘ | × | ∘ | ∘ | × |
| | Blocking | | ∘ | ∘ | ∘ | ∘ | × | × | × |

**[Table 3]**

| | | Kind | Example 3-1 | Example 3-2 | Example 3-3 | Comparative Example 3-1 | Comparative Example 3-2 | Comparative Example 3-3 | Comparative Example 3-4 |
|---|---|---|---|---|---|---|---|---|---|
| Composition of resin composition | Polyolefin-based resin (% by mass) | 2 | 40 | 40 | 40 | 40 | 40 | 40 | 40 |
| | Entire amount of calcium carbonate (% by mass) | | 60 | 60 | 60 | 60 | 60 | 60 | 60 |
| Ratio of calcium carbonate | First calcium carbonate | A | 98 | 95 | | 80 | 99 | 95 | 99 |
| | | B | | | 90 | | | | |
| | Second calcium carbonate | a | 2 | 5 | 10 | 20 | 1 | | |
| | | b | | | | | | | |
| | Third calcium carbonate | α | | | | | | 5 | |
| | | β | | | | | | | 1 |
| Evaluation results | Printability | | ∘ | ∘ | ∘ | × | ∘ | ∘ | × |
| | Blocking | | ∘ | ∘ | ∘ | ∘ | × | × | × |

**[Table 4]**

| | | Kind | Example 4-1 | Example 4-2 | Example 4-3 | Comparative Example 4-1 | Comparative Example 4-2 | Comparative Example 4-3 | Comparative Example 4-4 |
|---|---|---|---|---|---|---|---|---|---|
| Composition of resin composition | Polyolefin-based resin (% by mass) | 2 | 15 | 15 | 15 | 15 | 15 | 15 | 15 |
| | Entire amount of calcium carbonate (% by mass) | | 85 | 85 | 85 | 85 | 85 | 85 | 85 |
| Ratio of calcium carbonate | First calcium carbonate | A | 98 | 95 | 90 | 80 | 99 | 95 | 99 |
| | | B | | | | | | | |
| | Second calcium carbonate | a | 2 | 5 | | 20 | 1 | | |
| | | b | | | 10 | | | | |
| | Third calcium carbonate | α | | | | | | 5 | |
| | | β | | | | | | | 1 |
| Evaluation results | Printability | | ∘ | ∘ | ∘ | × | ∘ | ∘ | × |
| | Blocking | | ∘ | ∘ | ∘ | ∘ | × | × | × |

As listed in the above results, the molded bodies obtained from the resin compositions including the first calcium carbonate and the second calcium carbonate in the amounts specified in the present invention had excellent printability and reduced blocking. Such effects were not observed in molded bodies obtained from resin compositions that did not satisfy the requirements of the present invention.

## Claims

1. A resin composition comprising:
a polyolefin-based resin and an inorganic substance powder in a mass ratio of 50:50 to 10:90, wherein
the inorganic substance powder comprises calcium carbonate,
the calcium carbonate comprises a first calcium carbonate having an average particle diameter of 0.5 µm or more and less than 2.0 µm measured by an air permeation method in accordance with JIS M-8511 and a second calcium carbonate having an average particle diameter of 2.0 µm or more and less than 9.0 µm measured by the air permeation method in accordance with JIS M-8511, and
a mass ratio of the first calcium carbonate and the second calcium carbonate is 90:10 to 98:2.

2. The resin composition according to claim 1, wherein the mass ratio of the polyolefin-based resin and the inorganic substance powder is 40:60 to 10:90.

3. The resin composition according to claim 1 or 2, wherein the polyolefin-based resin is derived from plants.

4. The resin composition according to any one of claims 1 to 3, wherein the polyolefin-based resin comprises a polypropylene resin and/or a polyethylene resin.

5. The resin composition according to any one of claims 1 to 4, wherein the calcium carbonate is surface-treated heavy calcium carbonate.

6. A molded product made of the resin composition as claimed in any one of claims 1 to 5.

7. The molded product according to claim 6, wherein the molded product is a packaging bag.

8. The molded product according to claim 6, wherein the molded product is a printing sheet.
